# EUROPEAN PATENT SPECIFICATION

(11) **EP 3 902 706 B1**
(45) Date of publication and mention of the grant of the patent: **01.11.2023**
(21) Application number: 19904924.8
(22) Date of filing: 27.12.2019
(51) Int. Cl.: B60R 11/04, B60R 11/00, B60R 11/02

(54) **DRIVER ASSIST SYSTEM**
FAHRERASSISTENZSYSTEM
SYSTÈME D'AIDE À LA CONDUITE

(30) Priority: 28.12.2018 US 201862785740 P; 26.09.2019 US 201962906387 P
(43) Date of publication of application: 03.11.2021
(60) Divisional application: 23195584.0
(73) Proprietor: ZF Active Safety and Electronics US LLC, Livonia MI 48150 (US)
(72) Inventor: HART, Michael A., Dexter, Michigan 48130 (US); HARSH, Shah, Southfield, Michigan 48076 (US)
(74) Representative: Ege Lee & Roider Patentanwälte
(86) International application number: PCT/US2019/068707
(87) International publication number: WO 2020/140016

(56) References cited:
- EP-A1- 3 268 249
- EP-A1- 3 330 131
- EP-A1- 3 372 452
- GB-A- 2 554 302
- US-A1- 2016 318 457
- US-A1- 2018 239 223
- US-A1- 2018 364 076

## Description

### Field of the present invention

The present invention is directed to a mounting arrangement for a driver assist system and, more particularly, to a mounting arrangement for a driver assist system that is mounted to a vehicle window.

### Background

Vehicle driver assist systems that use a camera to monitor the environment surrounding the vehicle are known. For example, one particular type of driver assist system monitors the area in front of the vehicle and uses a forward looking camera. It is common to mount a forward looking driver assist system to the front windshield of the vehicle. Such a forward looking driver assist system can aid a driver in the operation of a motor vehicle by providing operational information such as a potential collision, lane or roadway departure, location of pedestrians, road sign information, etc. Driver assist systems could also be mounted to other vehicle locations such as the rear window.

Data from the driver assist system is provided to other vehicle systems to provide the driver with a warning, haptic or tactile feedback, and/or autonomous control of the vehicle. Technological background can be found, e.g., in EP 3 330 131 A1.

EP3330131A1 discloses a vehicle driver assist system comprising a housing having a camera mounted therein, the housing having at least one tab and a mounting bracket connectable with the vehicle, the mounting bracket including at least one locking arm having an upper surface that engages a lower surface on the tab on the housing, the upper surface on the locking arm extending generally perpendicular to a vertical surface on the locking arm.

### Summary of the present invention

The invention is defined by a vehicle driver assist system according to claim 1. The present invention relates to a vehicle driver assist system having a housing with a camera mounted therein. The housing has at least one tab. A mounting bracket connectable with the vehicle includes at least one locking arm having an upper surface that engages a lower surface on the tab on the housing. The upper surface on the locking arm extends generally perpendicular to a vertical surface on the locking arm.

In another aspect of the present invention, the mounting bracket includes a biasing member that applies a force to the housing to urge the lower surface on the tab of the housing into engagement with the upper surface on the locking arm.

According to the present invention, a vehicle driver assist system includes a housing having a camera mounted therein. The housing has at least one tab. A mounting bracket connectable with the vehicle includes a channel for receiving the tab on the housing. The channel is at least partially defined by an arm extending from a sidewall of the bracket. The arm has an end surface and the sidewall has a guide surface. The end surface of the arm and the guide surface at least partially define an insertion opening that faces generally downwardly. The tab on the housing slides into the channel in the mounting bracket through the insertion opening to connect the housing to the mounting bracket. The housing and the tab are pivotal relative to the bracket after the tab has slid into the channel.

### Brief Description of the Drawings

The foregoing and other features and advantages of the present invention will become apparent to those skilled in the art to which the present invention relates upon reading the following description with reference to the accompanying drawings, in which:
Fig. 1 shows a schematic side view of a first embodiment of a driver assist system constructed in accordance with the present invention;
Fig. 2 shows an exploded view of the driver assist system of Fig. 1;
Fig. 3 shows a housing being inserted into a bracket of the driver assist system of Fig. 1;
Fig. 4 shows an enlarged view of a portion of the driver assist system of Fig. 1;
Fig. 5 shows an enlarged view of a rear portion of the driver assist system of Fig. 1;
Fig. 6 shows a top view of the driver assist system of Fig. 1;
Fig. 7 shows an enlarged view of a sidewall of the bracket of the driver assist system of Fig. 1;
Fig. 8 shows a schematic side view of a driver assist system not corresponding to the present invention;
Fig. 9 shows a pictorial view of a bracket of the driver assist system of Fig. 8;
Fig. 10 shows an enlarged view of a rear portion of the driver assist system of Fig. 8; and
Fig. 11 shows a schematic cross-sectional view of the driver assist system of Fig. 8.

### Description

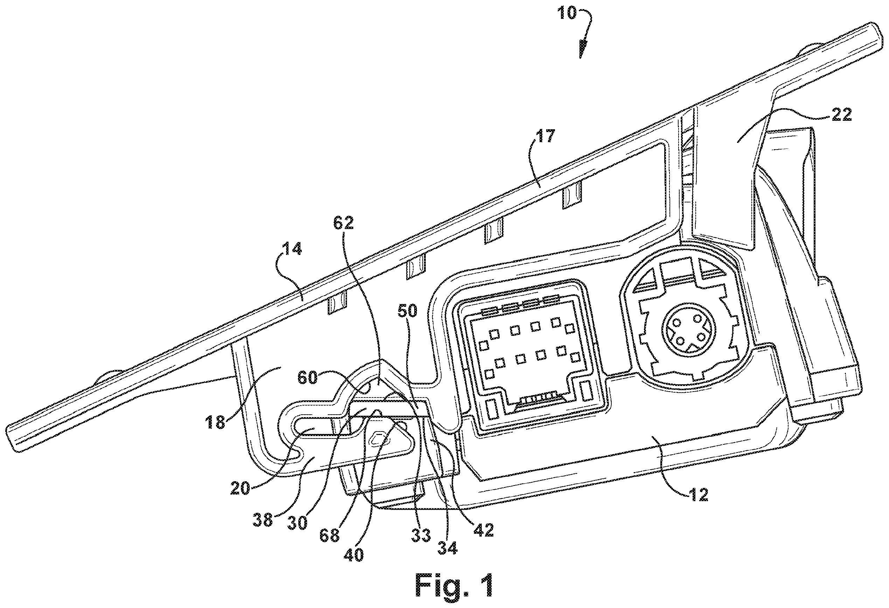

A vehicle driver assist system 10 constructed in accordance with the present invention is shown in Figs. 1-3. The driver assist system 10 includes a housing 12 secured in a mounting bracket 14. A camera 16 or other sensor is mounted within the housing 12. The camera 16 is operatively connected to data processing circuitry (not shown) within the camera housing 12 for processing any image within the field of view of the camera. The circuitry within the housing 12 is connectable with other vehicle systems. For the purposes of explanation, the driver assist system 10 is a forward looking system and may be mounted to a window of a vehicle, such as a front windshield. The driver assist system 10 views the environment outside of the vehicle and analyzes monitored information for vehicle functions, such as lane keeping, roadway departures, pedestrian information, road sign information, etc. The analyzed information is then further processed and used by vehicle control systems and/or warning systems. Those skilled in the art will appreciate that the present invention is applicable to other driver assist systems such as a rearward facing system for monitoring the environment rearward of the vehicle.

The mounting bracket 14 is connectable to the window in any desired manner. The mounting bracket 14 may have a mounting portion 17 that is connectable to the window and that least one sidewall 18 that extends from the mounting portion 17 away from the window when the mounting bracket is connected to the window. The mounting bracket 14 is shown as having two sidewalls 18 that extend on opposite sides of the housing 12 when the housing is connected to the bracket.

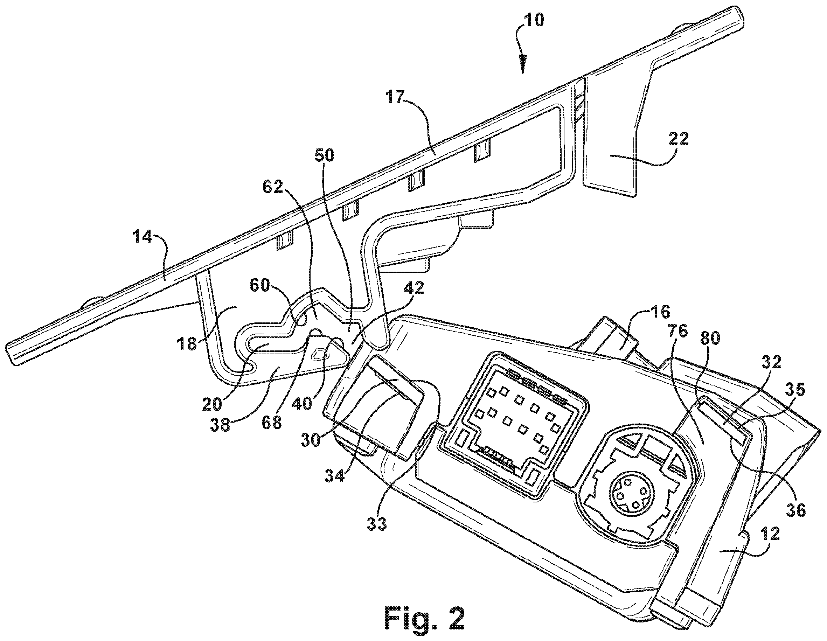

Each of the sidewalls 18 (Fig. 2) has a forward channel or slot 20. The mounting bracket 14 is shown as having two forward channels 20, however, it is contemplated that the bracket 14 may include any desired number of forward channels. The mounting bracket 14 has at least one rear locking arm 22. The mounting bracket 14 is shown as having two rear locking arms 22, however, it is contemplated that the bracket may include any number of rear locking arms.

The forward channels 20 on the mounting bracket 14 receive forward or first rectangular tabs 30 on the housing 12. The housing 12 may have two forward tabs 30 extending from opposite sides of the housing. The rear locking arms 22 engage rearward or second rectangular tabs 32 on the housing 12. The housing may have two rearward tabs 32 that extend from opposite sides of the housing 12. The forward tabs 30 may have upper surfaces 33 and lower surfaces 34 that extend generally parallel to the upper surfaces 33. The rearward tabs 32 may have upper surfaces 35 and lower surfaces 36 that extend generally parallel to each other. The upper surfaces 33 and lower surfaces 34 of the forward tabs 30 may extend generally parallel to the upper surfaces 35 and lower surfaces 36 of the rearward tabs 32.

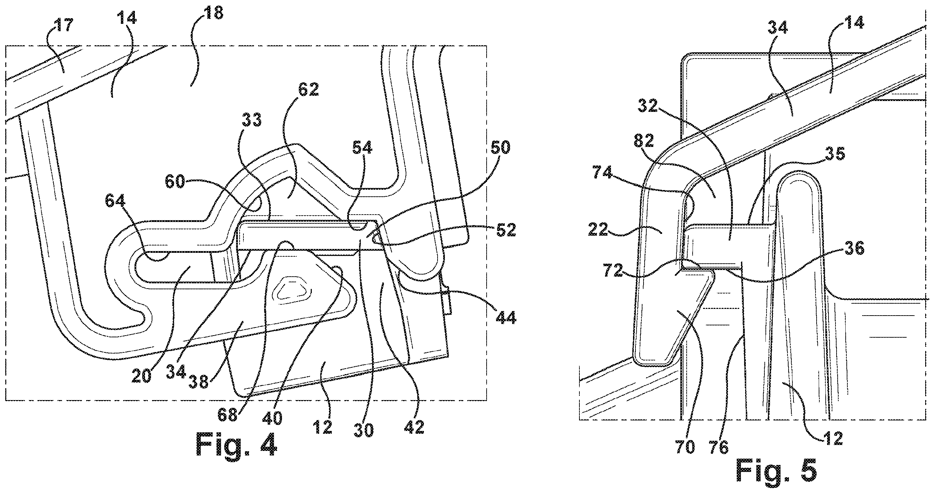

The forward channels 20 (Fig. 4) are at least partially defined by arms 38 extending from the sidewalls 18 of the bracket 14. Only one arm 38 of the bracket 14 will be described in detail. The arm 38 has an end surface 40 that partially defines an insertion opening 42 that faces generally downwardly. The end surface 40 of the arm 38 extends generally parallel to a guide surface 44 on the sidewall 18 of the bracket 14 to define the insertion opening 42. A V-shaped notch 50 in the guide surface 44 is defined by first and second side surfaces 52, 54 of the notch 50 extending at an angle to each other. The first and second side surfaces 52, 54 of the notch 50 extend generally transverse to the guide surface 44.

A curved surface 60 extends from the guide surface 44 on the sidewall 18. The curved surface 60 is spaced from the notch 50 and faces toward the insertion opening 42. The curved surface 60 and the portion of the guide surface 44 extending between the curved surface and the notch 50 define a wedged shaped portion 62 of the forward channel 20. A surface 64 on the sidewall 18 extends from the curved surface 60 and generally parallel to the arm 38. The surface 64 extends from the curved surface 60 to an end of the channel 20. The space between the surface 64 and the arm 38 provides strain relief to help prevent the mounting bracket 14 from breaking.

After the mounting bracket 14 (Figs. 2-3) is secured to the window or windshield, the housing 12 is snapped into the bracket by first inserting the forward tabs 30 into the associated forward channels 20 and then pivoting the rear end of the housing into engagement with the rear locking arms 22. The rear locking arms 22 lock onto the associated rearward tabs 32 of the housing 12 thereby securing the housing into the bracket.

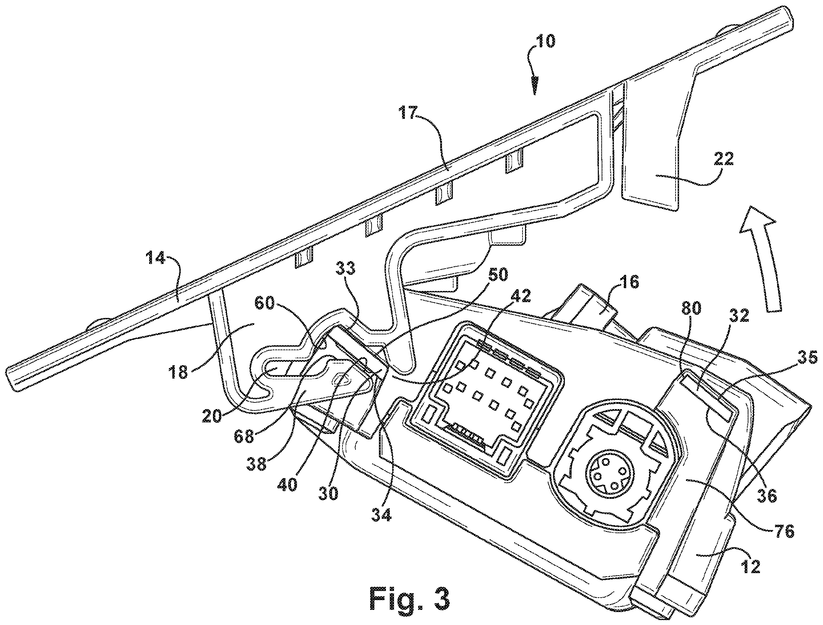

The forward tabs 30 are inserted into the insertion openings 42 with the rearward tabs 32 spaced from the rear locking arms 22, as shown in Fig. 3. The forward tabs 30 may engage the end surfaces 40 on the arms 38 extending from the sidewalls 18 and the guide surfaces 44 on the sidewalls to guide insertion of the forward tabs into the forward channels 20. The forward tabs 30 may be inserted into the forward channels 20 until the forward tabs engage the curved surfaces 60.

After insertion of the forward tabs 30 into the forward channels 20, the housing 12 may be pivoted relative to the bracket 14 from the position shown in Figs. 3 toward the position shown in Fig. 1. The rearward tabs 32 move toward the rear locking arms 22 as the housing 12 is pivoted relative to the bracket 14. The housing 14 is pivoted until the upper surfaces 33 of the forward tabs 30 engage the second notch side surfaces 54 and the lower surfaces 34 of the forward tabs engage stop surfaces 68 on the arms. The rearward tabs 32 may engage the rear locking arms 22. The housing12 may be pivoted about the intersection of the second notch side surface 54 and the guide surface 44 and/or the intersection of the end surface 40 of the arm 38 and the stop surface 68 on the arm. The forward tabs 30 may be spaced from the curved surfaces 60 when the housing 12 is pivoting relative to the bracket 14 and once the tabs 30 engage the stop surface 68 and/or the second side surface 54 of the notch 50.

The housing 12 is pivoted relative to the mounting bracket 14 until the forward tabs 30 engage the second side surfaces 54 of the notches 50 and the stop surfaces 68. It is also contemplated that the forward tabs 30 may engage the first side surfaces 52 of the notches. The forward tabs 30 may have an interference fit between the second side surfaces 54 of the notches 50 and the stop surfaces 68 on the arms 36 when the housing 12 is connected to the bracket 14.

The rearward tabs 32 (Fig. 5) on the housing 12 snap into the rear locking arms 22 when the housing pivots relative to the bracket 14. Only one locking arm 22 of the bracket 14 will be described in detail. The locking arm 22 has detent 70 that engages the rearward tab 32. The detent 70 has an upper surfaces 72 that engages the lower surface 36 on the rearward tab 32. The upper surface 72 on the detent 70 may extend generally perpendicular to a vertical surface 74 on the locking arm 22. The lower surface 36 on the rearward tab 32 of the housing 12 may extend generally perpendicular to a vertical surface 76 of the housing. Thus, the lower surface 36 on the rearward tab 32 of the housing 12 may extend generally parallel to the upper surface 72 on the locking arm detent 70 when the housing is connected to the bracket 14.

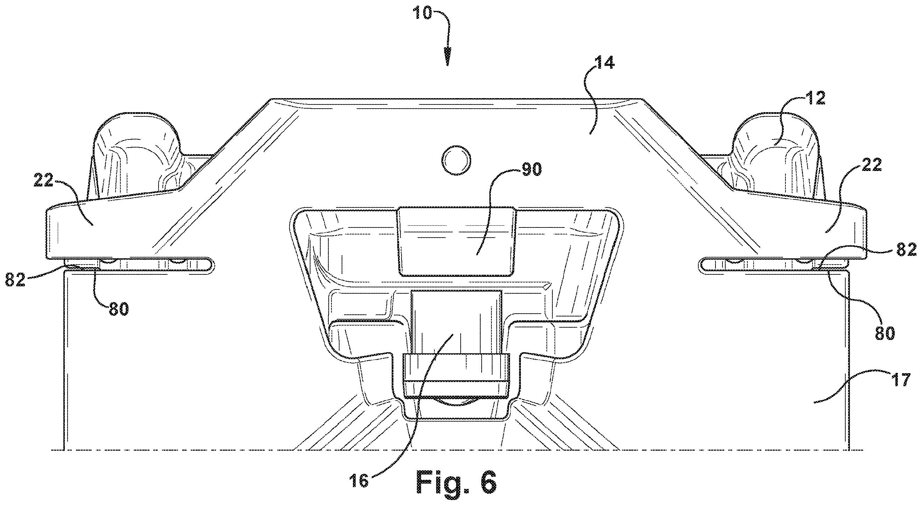

The rearward tabs 32 on the housing 12 may have forward facing surfaces 80 that engage rearward facing surfaces 82 on the bracket 14 to prevent the camera or sensor 16 extending from the housing from engaging the window. A biasing member or spring tab 90 (Fig. 6) on the bracket 14 may apply a downward force on the housing 12 to help maintain the rearward tabs 32 in engagement with the upper surfaces 72 on the detents 70. The biasing member 90 urges the lower surfaces 36 on the tabs 32 of the housing 12 into engagement with the upper surfaces 72 on the detents 70 of the locking arms 22.

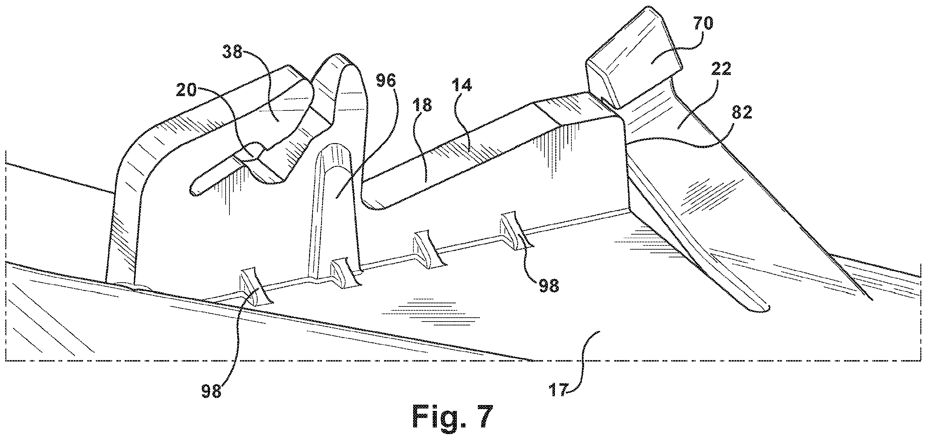

The sidewalls 18 (Fig. 7) of the bracket 14 may include projections 96 extending toward the housing 12 when the housing is connected to the bracket. The projections 96 may engage the housing 12 when the housing is connected to the bracket 14. The bracket 14 may also have stiffening ribs 98 extending between the sidewalls 18 of the bracket and the mounting portion 17 of the bracket 14.

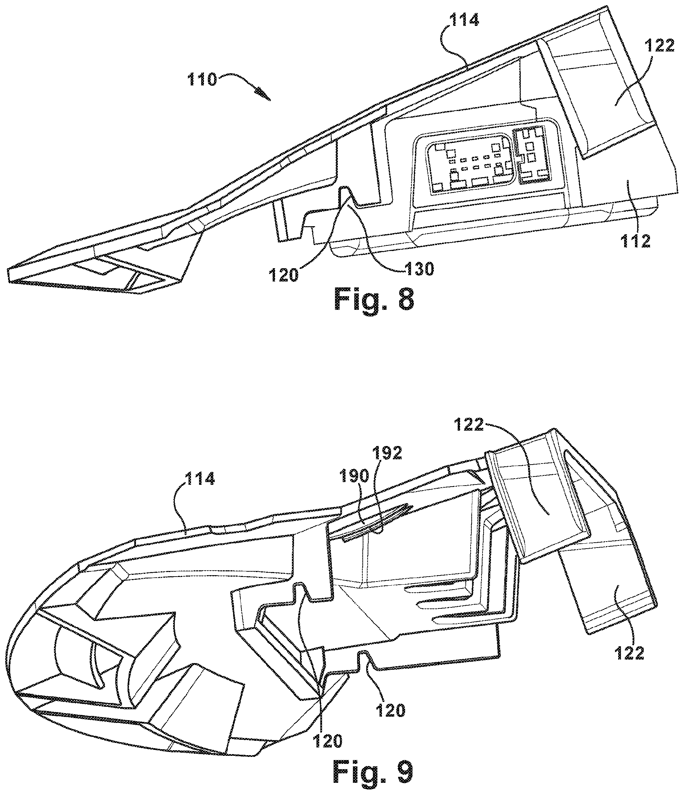

A vehicle driver assist system 110 not corresponding to the present invention is shown in the Figs. 8-11. This driver assist system 110 includes a housing 112 secured in a mounting bracket 114. A plurality of cameras or other sensors may be mounted within the housing 112. The housing 112 may have three cameras, however, it is contemplated that any desired number of cameras may be mounted within the housing. The cameras are operatively connected to data processing circuitry (not shown) within the camera housing 112 for processing images within the fields of view of the cameras. The circuitry within the housing 112 is connectable with other vehicle systems. The driver assist system 110 may be a forward looking system and may be mounted to a window of a vehicle, such as a front windshield. The driver assist system 110 views the environment outside of the vehicle and analyzes monitored information for vehicle functions, such as lane keeping, roadway departures, pedestrian information, road sign information, etc. The analyzed information is then further processed and used by vehicle control systems and/or warning systems. Those skilled in the art will appreciate that the present invention is applicable to other driver assist systems such as a rearward facing system for monitoring the environment rearward of the vehicle.

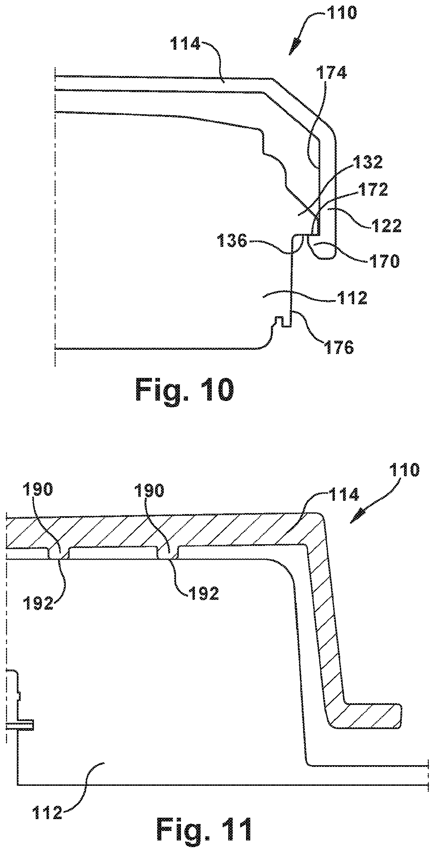

The mounting bracket 114 is connectable to the window in any desired manner. The mounting bracket 114 includes at least one forward channel or slot 120 (Figs. 8-9). It is contemplated that the bracket 114 may include any desired number of forward channels 120. The mounting bracket 114 has at least one rear locking arm 122. It is contemplated that the bracket 114 may include any number of rear locking arms 122. The forward channels 120 on the mounting bracket 114 receive forward or first tabs 130 on the housing 112. The rear locking arms 122 engage rearward tabs 132 on the housing 112 (Fig. 10).

After the mounting bracket 114 is secured to the window or windshield (Fig. 8), the housing 112 is snapped into the bracket 114 by first inserting the forward tabs 130 into the associated front channels 120 and then pivoting the rear end of the housing into engagement with the rear locking arms 122. The rear locking arms 122 lock onto associated rearward tabs 132 of the housing 112 thereby securing the housing into the bracket 114.

The rearward tabs 132 on the housing 112 snap into the rear locking arms 122 when the housing pivots relative to the bracket 114. The rear locking arms 122 (Fig. 10) have detents 170. The detents 170 on the locking arms 122 have upper surfaces 172 that engage lower surfaces 136 on the rearward tabs 132. The upper surfaces 172 on the locking arm detents 170 may extend generally perpendicular to vertical surfaces 174 on the locking arms 122. The lower surfaces 136 on the rearward tabs 122 of the housing 112 may extend generally perpendicular to side walls 176 of the housing. Thus, the lower surfaces 136 on the rearward tabs 132 of the housing 112 may extend generally parallel to the upper surfaces 172 on the locking arm detents 170.

The mounting bracket 114 may include at least one biasing member or rib 190 (Figs. 9 and 11) that engages the housing 112 when the housing is connected to the mounting bracket 114. It is contemplated that the mounting bracket 114 may have any desired number of ribs 190. The ribs 190 allow the housing 112 to pivot relative to the bracket 114 beyond a nominal location so that the rearward tabs 132 on the housing snap into the rear locking arms 122 of the bracket. The ribs 190 may have a curved surface 192 that engages the housing 112 and permits pivoting of the housing beyond the nominal location. The ribs 190 may also apply a force to the housing 112 to ensure that the upper surfaces 172 on the locking arm detents 170 engage the lower surfaces on the rearward tabs 132 of the housing.

## Claims

1. A vehicle driver assist system (10; 110) comprising:
a housing (12; 112) having a camera (16) mounted therein, the housing (12, 112) having at least one tab (32; 132); and
a mounting bracket (14; 114) connectable with the vehicle, the mounting bracket (14; 114) including at least one locking arm (22; 122) having an upper surface (72; 172) that engages a lower surface (36; 136) on the tab (32; 132) on the housing (12; 112), the upper surface (72, 172) on the locking arm (22; 122) extending generally perpendicular to a vertical surface (74; 174) on the locking arm (22; 122),
wherein the mounting bracket (14; 114) includes a channel (20; 120) for receiving a second tab (30; 130) on the housing (12; 112), the channel (20; 120) being at least partially defined by an arm (38) extending from a sidewall (18) of the bracket (14; 114), the arm (38) having an end surface (40) and the sidewall (18) having a guide surface (44), the end surface (40) of the arm (38) and the guide surface (44) at least partially defining an insertion opening (42) that faces generally downwardly, the second tab (30; 130) on the housing (12; 112) sliding into the channel (20; 120) in the mounting bracket (14; 114) through the insertion opening (42) to connect the housing (12; 112) to the mounting bracket (14; 114), the housing (12; 112) and the second tab (30; 130) being pivotal relative to the bracket (14; 114) after the second tab (30; 1309 has slid into the channel (20; 120),
**characterised in that** there is provided
a V-shaped notch (50) in the guide surface (44) defined by first and second side surfaces (52, 54) of the notch (50) extending at an angle to each other, the first and second side surfaces (52, 54) of the notch (50) extending transverse to the guide surface (44), the second tab (30; 130) engaging the second side surface (54) defining the notch (50) and a stop surface (68) on the arm (38) when the housing (12; 112) is connected to the bracket (14; 114).

2. A vehicle driver assist system (10; 110) as set forth in claim 1 wherein the lower surface (36; 136) on the tab (32; 132) of the housing (12; 112) extends generally perpendicular to a vertical surface (76; 176) on a side wall of the housing (12; 112).

3. A vehicle driver assist system (10; 110) as set forth in claim 1 wherein the mounting bracket (14; 114) includes a biasing member (90; 190) that applies a force to the housing (12; 112) to urge the lower surface (36; 136) on the tab (32; 132) of the housing (12; 112) into engagement with the upper surface (72; 172) on the locking arm (22; 122).

4. A vehicle driver assist system (10; 110) as set forth in claim 3 wherein the biasing member (90; 190) is a rib (190) that engages the housing (12; 112).

5. A vehicle driver assist system (10; 110) as set forth in claim 4 wherein the rib (190) has a curved surface (92) that engages the housing (12; 112).

6. A vehicle driver assist system (10; 110) as set forth in claim 3 wherein the biasing member (90; 190) is a spring tab (90) that engages the housing (12; 112).

## Patentansprüche

1. Fahrzeugfahrerassistenzsystem (10; 110), umfassend:
ein Gehäuse (12; 112) mit einer darin angebrachten Kamera (16), wobei das Gehäuse (12; 112) zumindest eine Zunge (32; 132) aufweist; und
eine Montagehalterung (14; 114), die mit dem Fahrzeug verbindbar ist, wobei die Montagehalterung (14; 114) zumindest einen Sperrarm (22; 122) mit einer oberen Oberfläche (72; 172) enthält, die eine untere Oberfläche (36; 136) an der Zunge (32; 132) am Gehäuse (12; 112) in Eingriff nimmt, wobei die obere Oberfläche (72; 172) am Sperrarm (22; 122) im Allgemeinen senkrecht zu einer vertikalen Oberfläche (74; 174) am Sperrarm (22; 122) verläuft;
wobei die Montagehalterung (14; 114) einen Kanal (20; 120) zum Aufnehmen einer zweiten Zunge (30; 130) am Gehäuse (12; 112) enthält, wobei der Kanal (20; 120) zumindest teilweise durch einen Arm (38) definiert ist, der von einer Seitenwand (18) der Halterung (14; 114) aus verläuft, wobei der Arm (38) eine Endfläche (40) aufweist und die Seitenwand (18) eine Führungsfläche (44) aufweist, wobei die Endfläche (40) des Arms (38) und die Führungsfläche (44) zumindest teilweise eine Einführungsöffnung (42) definieren, die im Allgemeinen nach unten gerichtet ist, wobei die zweite Zunge (30; 130) am Gehäuse (12; 112) in den Kanal (20; 120) in der Montagehalterung (14; 114) durch die Einführungsöffnung (42) gleitet, um das Gehäuse (12; 112) mit der Montagehalterung (14; 114) zu verbinden, wobei das Gehäuse (12; 112) und die zweite Zunge (30; 130) bezüglich der Halterung (14; 114) schwenkbar sind, nachdem die zweite Zunge (30; 130) in den Kanal (20; 120) geglitten ist,
**dadurch gekennzeichnet, dass**
eine V-förmige Kerbe (50) in der Führungsfläche (44) vorgesehen ist, die durch erste und zweite Seitenflächen (52, 54) der Kerbe (50) definiert ist, welche in einem Winkel zueinander verlaufen, wobei die ersten und zweiten Seitenflächen (52, 54) der Kerbe (50) quer zur Führungsfläche (44) verlaufen, wobei die zweite Zunge (30; 130) die zweite Seitenfläche (54), die die Kerbe (50) definiert, und eine Anschlagfläche (68) am Arm (38) in Eingriff nimmt, wenn das Gehäuse (12; 112) mit der Halterung (14; 114) verbunden ist.

2. Fahrzeugfahrerassistenzsystem (10; 110) nach Anspruch 1, wobei die untere Oberfläche (36; 136) an der Zunge (32; 132) des Gehäuses (12; 112) im Allgemeinen senkrecht zu einer vertikalen Oberfläche (76; 176) an einer Seitenwand des Gehäuses (12; 112) verläuft.

3. Fahrzeugfahrerassistenzsystem (10; 110) nach Anspruch 1, wobei die Montagehalterung (14; 114) ein Vorspannglied (90; 190) enthält, das eine Kraft auf das Gehäuse (12; 112) ausübt, um die untere Oberfläche (36; 136) an der Zunge (32; 132) des Gehäuses (12; 112) in Eingriff mit der oberen Oberfläche (72; 172) am Sperrarm (22; 122) zu drängen.

4. Fahrzeugfahrerassistenzsystem (10; 110) nach Anspruch 3, wobei das Vorspannglied (90; 190) eine Rippe (190) ist, die das Gehäuse (12; 112) in Eingriff nimmt.

5. Fahrzeugfahrerassistenzsystem (10; 110) nach Anspruch 4, wobei die Rippe (190) eine gekrümmte Oberfläche (92) aufweist, die das Gehäuse (12; 112) in Eingriff nimmt.

6. Fahrzeugfahrerassistenzsystem (10; 110) nach Anspruch 3, wobei das Vorspannglied (90; 190) eine Federzunge (90) ist, die das Gehäuse (12; 112) in Eingriff nimmt.

## Revendications

1. Système d'assistance au conducteur d'un véhicule (10 ; 110) comprenant :
un boîtier (12 ; 112) dans lequel est montée une caméra (16), le boîtier (12, 112) comportant au moins une languette (32 ; 132) ; et
un support de montage (14 ; 114) pouvant être relié au véhicule, le support de montage (14 ; 114) comportant au moins un bras de verrouillage (22 ; 122) ayant une surface supérieure (72 ; 172) qui s'engage dans une surface inférieure (36 ; 136) de la languette (32 ; 132) sur le boîtier (12 ; 112), la surface supérieure (72 ; 172) du bras de verrouillage (22 ; 122) s'étendant généralement perpendiculairement à une surface verticale (74 ; 174) du bras de verrouillage (22 ; 122),
dans lequel le support de montage (14 ; 114) comprend un canal (20 ; 120) destiné à recevoir une deuxième languette (30 ; 130) sur le boîtier (12 ; 112), le canal (20 ; 120) étant au moins partiellement défini par un bras (38) s'étendant à partir d'une paroi latérale (18) du support (14 ; 114), le bras (38) ayant une surface d'extrémité (40) et la paroi latérale (18) ayant une surface de guidage (44), la surface d'extrémité (40) du bras (38) et la surface de guidage (44) définissant au moins partiellement une ouverture d'insertion (42) orientée généralement vers le bas, la deuxième languette (30 ; 130) du boîtier (12 ; 112) coulissant dans le canal (20 ; 120) du support de montage (14 ; 114) à travers l'ouverture d'insertion (42) pour relier le boîtier (12 ; 112) au support de montage (14 ; 114), le boîtier (12 ; 112) et la deuxième languette (30 ; 130) étant pivotants par rapport au support (14 ; 114) après que la deuxième languette (30 ; 1309) a glissé dans le canal (20 ; 120),
caractérisé en qu'il est prévu une encoche en forme de V (50) dans la surface de guidage (44) définie par les première et deuxième surfaces latérales (52, 54) de l'encoche (50) s'étendant en angle l'une par rapport à l'autre, les première et deuxième surfaces latérales (52, 54) de l'encoche (50) s'étendant transversalement à la surface de guidage (44), la deuxième languette (30 ; 130) s'engageant dans la deuxième surface latérale (54) définissant l'encoche (50) et une surface de butée (68) sur le bras (38) lorsque le boîtier (12 ; 112) est relié au support (14 ; 114).

2. Système d'assistance au conducteur d'un véhicule (10 ; 110) selon la revendication 1, dans lequel la surface inférieure (36 ; 136) de la languette (32 ; 132) du boîtier (12 ; 112) s'étend généralement perpendiculairement à une surface verticale (76 ; 176) d'une paroi latérale du boîtier (12 ; 112).

3. Système d'assistance au conducteur d'un véhicule (10 ; 110) selon la revendication 1, dans lequel le support de montage (14 ; 114) comprend un élément de sollicitation (90 ; 190) qui applique une force au boîtier (12 ; 112) pour pousser la surface inférieure (36 ; 136) sur la languette (32 ; 132) du boîtier (12 ; 112) en prise avec la surface supérieure (72 ; 172) sur le bras de verrouillage (22 ; 122).

4. Système d'assistance au conducteur d'un véhicule (10 ; 110) selon la revendication 3, dans lequel l'élément de sollicitation (90 ; 190) est une nervure (190) qui s'engage dans le boîtier (12 ; 112).

5. Système d'assistance au conducteur d'un véhicule (10 ; 110) selon la revendication 4, dans lequel la nervure (190) a une surface incurvée qui s'engage dans le boîtier (12 ; 112).

6. Système d'assistance au conducteur d'un véhicule (10 ; 110) selon la revendication 3, dans lequel l'élément de sollicitation (90 ; 190) est une languette à ressort (90) qui s'engage dans le boîtier (12 ; 112).
